# EUROPÄISCHE PATENTANMELDUNG

(11) **EP 4 420 515 A1**
(43) Veröffentlichungstag der Anmeldung: **28.08.2024**
(21) Anmeldenummer: 23220175.6
(22) Anmeldetag: 22.12.2023
(51) Int. Cl.: A01K 15/04, A61D 3/00, A01K 15/00

(54) **BEHANDLUNGSSTAND UND BEHANDLUNGSVERFAHREN ZUR BEHANDLUNG EINES TIERES**

(30) Priorität: 23.02.2023 DE 102023104411
(71) Anmelder: Mayer, Anton, 87776 Sontheim-Attenhausen (DE)
(72) Erfinder: Mayer, Anton, 87776 Sontheim-Attenhausen (DE)
(74) Vertreter: Patentanwälte Olbricht, Buchhold, Keulertz Partnerschaft mbB

(57) **Zusammenfassung**

Die vorgestellte Erfindung betrifft einen Behandlungsstand (100) zur Behandlung eines Tieres, wobei der Behandlungsstand (100) einen Rahmen (101), der einen Behandlungsbereich (103) zum Aufnehmen des Tieres von mehreren Seiten begrenzt, eine Anzahl Halteelemente (105) zum Halten des Tieres und einen Antrieb (107) zum Bewegen der Halteelemente (105) zwischen einer Einlassstellung und einer Haltestellung umfasst, wobei der Antrieb (107) zwischen einer ersten Konfiguration und einer zweiten Konfiguration umschaltbar ist, wobei eine Geschwindigkeit, mit der der Antrieb (107) die Anzahl Halteelemente (105) bewegt in der ersten Konfiguration größer ist als in der zweiten Konfiguration, und wobei eine Kraft, mit der der Antrieb (107) die Anzahl Halteelemente bewegt, in der zweiten Konfiguration größer ist als in der ersten Konfiguration.

## Beschreibung

Die vorgestellte Erfindung betrifft einen Behandlungsstand und ein Behandlungsverfahren zur Behandlung eines Tieres gemäß den beigefügten Patentansprüchen.

Zur Behandlung von Tieren, wie bspw. zur Pflege von Klauen von Rindern, werden insbesondere große und schwere Tiere in einen Behandlungsstand getrieben und dort gesichert.

Zum Sichern eines Tiers in einem Behandlungsstand werden Gurte am Boden ausgelegt, so dass das Tier beim Eintreten in den Behandlungsstand über die Gurte steigt. Nach dem Eintreiben des Tieres in den Behandlungsstand befinden sich die Gurte in der Regel zwischen den Vorder- und Hinterbeinen des Tieres. Danach werden die Gurte angehoben, um das Tier anzuheben bzw. zu entlasten und dessen Gliedmaßen, insbesondere die Klauen bewegen und behandeln zu können.

Jedoch treten manche Tiere beim Anheben der Gurte mit ihren vorderen oder hinteren Beinen zwischen die Gurte. Wenn das geschieht, ist ein anheben bzw. entlasten des Tieres nicht möglich und eine oder zwei Personen müssen die Gliedmaßen per Hand zurückheben, was sehr gefährlich ist.

Insbesondere Rinder sind im Bauchbereich sehr empfindlich und als Fluchttiere besonders anfällig für gefährliche Abwehrreaktionen, wie bspw. ein Ausschlagen.

Ferner sind Behandlungsstände mit Türen bekannt, die mittels eines Aktuators geöffnet oder geschlossen werden können. Um ein Tier in eine finale Position in dem Pflegestand zu treiben wirken beim Bewegen der Tür starke Kräfte, durch die es zu Quetschungen oder anderen Verletzungen bei Bediener und Tier kommen kann.

Vor diesem Hintergrund ist es eine Aufgabe der vorgestellten Erfindung, einen sicheren Behandlungsstand zur Behandlung eines Tieres, insbesondere zur Klauenpflege bei Rindern, bereitzustellen.

Zur Lösung der voranstehend genannten Aufgabe wird gemäß einem ersten Aspekt der vorgestellten Erfindung ein Behandlungsstand zur Behandlung eines Tieres vorgestellt.

Der Behandlungsstand umfasst einen Rahmen, der einen Behandlungsbereich zum Aufnehmen des Tieres von mehreren Seiten begrenzt, eine Anzahl Halteelemente zum Halten des Tieres sowie einen Antrieb zum Bewegen der Halteelemente zwischen einer Einlassstellung und einer Haltestellung und/oder zum Bewegen einer Tür in einem Einlassbereich des Rahmens zwischen einer Öffnungsstellung und einer Schließstellung.

Bezogen auf die Halteelemente umfasst der Antrieb erste Aktuatoren, wobei die ersten Aktuatoren zwischen einer ersten Konfiguration und einer zweiten Konfiguration umschaltbar sind, wobei eine Geschwindigkeit, mit der die ersten Aktuatoren die Anzahl Halteelemente bewegen in der ersten Konfiguration größer ist als in der zweiten Konfiguration, und wobei eine Kraft, mit der die ersten Aktuatoren die Anzahl Halteelemente bewegen, in der zweiten Konfiguration größer ist als in der ersten Konfiguration.

Unter einem Antrieb ist im Kontext der vorgestellten Erfindung eine Vorrichtung zum Bereitstellen einer Kraft oder von Energie zum Bewegen eines Objekts, wie bspw. einem Halteelement (oder eine Tür), zu verstehen. Ein Antrieb kann ein manueller Antrieb, wie bspw. eine Kurbel oder ein automatisierter Antrieb sein.

Die vorgestellte Erfindung basiert auf einem Antrieb mit ersten Aktuatoren, die zwischen einer ersten Konfiguration und einer zweiten Konfiguration umschaltbar sind, so dass eine durch den Antrieb bereitgestellte Kraft zu einer besonders schnellen oder langsamen Bewegung oder einer besonders starken oder schwachen Bewegung der Anzahl Halteelemente führt.

Durch einen solchen umschaltbaren Antrieb können beim Eintreiben eines Tieres in den vorgestellten Behandlungsstand die Halteelemente in der ersten Konfiguration des Antriebs besonders schnell angehoben werden, so dass das Tier keine Zeit hat zwischen die Halteelemente zu treten oder sich darin zu verheddern. Entsprechend wird eine gefährliche Situation, in der ein Bediener des Behandlungsstands Gliedmaßen des nicht entlasteten Tieres umpositionieren muss, verhindert.

Um das Tier anzuheben bzw. zu entlasten, wird der Antrieb und dessen Aktuatoren in die zweite Konfiguration geschaltet, in der die Halteelemente langsamer als in der ersten Konfiguration jedoch mit größerer Kraft als in der ersten Konfiguration bewegt werden, wodurch das Tier relativ sanft behandelt wird.

Nachdem das Tier angehoben bzw. entlastet ist, können dessen Gliedmaßen und/oder Klauen gefahrlos fixiert und behandelt werden.

Die Erfindung sieht weiter vor, dass die ersten Aktuatoren des Antriebs zwei verschiedene Übersetzungen zum Übertagen einer Kraft auf die Halteelemente umfassen, wobei das Übersetzungsverhältnis in der ersten Konfiguration der Aktuatoren kleiner ist als das Übersetzungsverhältnis in der zweiten Konfiguration der Aktuatoren. Dadurch lassen sich beim Anheben des Tieres mit einfachen Mitteln unterschiedliche Geschwindigkeits- und Kraftprofile realisieren.

Mittels verschiedener mechanischer Übersetzungen, wie bspw. verschieden großer Zahnräder, kann eine gewünschte Kraft und/oder Geschwindigkeit besonders schnell und präzise eingestellt werden. Insbesondere kann mittels verschiedener mechanischer Übersetzungen eine durch eine manuelle Kurbel bereitgestellte Kraft zum einen für eine schnelle Bewegung jeweiliger Halteelemente und zum anderen für eine kräftige Bewegung der Haltemittel verwendet werden.

Ergänzend oder alternativ können die ersten Aktuatoren des Antriebs in der ersten Konfiguration seriell geschaltet und in der zweiten Konfiguration parallel geschaltet sind. Auch dadurch lassen sich unterschiedliche und genau dosierte Geschwindigkeits- und Kraftprofile für das Anheben und Absenken des Tiers realisieren.

Durch Verwendung mehrerer Aktuatoren kann, wenn diese in Reihe bzw. seriell wirken, eine besonders schnelle Bewegung oder, wenn diese parallel wirken, eine besonders große Kraft bereitgestellt werden.

Zum Umschalten des Antriebs bzw. der Aktuatoren zwischen der ersten Konfiguration und der zweiten Konfiguration kann der Behandlungsstand eine Benutzerschnittstelle, wie bspw. einen Hebel, einen Schalter oder jedes weitere technisch geeignete Bedienelement umfassen.

Die Aktivierung der Benutzerschnittstelle bewirkt eine Änderung in der Verteilung der durch den Antrieb bereitgestellt Kraft auf jeweilige Halteelemente, so dass diese entweder besonders schnell oder mit einer besonders großen Kraft bewegt werden. Dazu kann die Benutzerschnittstelle bspw. verschiedene Übersetzungen, verschiedene Kraftpfade oder verschiedene Schaltungen aktivieren bzw. umfassen.

Eine wichtige Ausführungsform der Erfindung sieht vor, dass ein erstes Steuergerät vorgesehen ist, das die ersten Aktuatoren des Antriebs regelt und/oder zwischen der ersten Konfiguration und der zweiten Konfiguration umschaltet, wobei das erste Steuergerät derart ausgebildet und eingerichtet ist, dass die Regelung und/oder Umschaltung der ersten Aktuatoren zwischen der ersten Konfiguration und der zweiten Konfiguration gemäß einer definierten Steuerkurve erfolgt. Dadurch ist es möglich, das Umschalten der Aktuatoren zu automatisieren und sowohl die Geschwindigkeiten der Halteelemente und die auf die Halteelemente einwirkenden Kräfte genauestens zu dosieren, so dass das zu behandelnde Tier nicht erschreckt und ungewollte Bewegungen, insbesondere Abwehr- oder Fluchtbewegungen ausführt.

Dazu trägt insbesondere bei, wenn die Steuerkurve zumindest abschnittsweise und/oder zeitweise die erste Konfiguration und die zweite Konfiguration der ersten Aktuatoren (109, 111) abbildet.

Konstruktiv ist es günstig, wenn die ersten Aktuatoren eine Welle antreiben, die an oder in dem Rahmen drehbar gelagert ist und an der die Anzahl Halteelemente aufzurollen oder abzurollen sind.

Die Welle kann einen Durchmesser zwischen 45 Millimeter und 200 Millimeter aufweisen, bevorzugt zwischen 70 Millimeter und 140 Millimeter. Besonders bevorzugt hat die Welle einen Durchmesser von 120 Millimetern.

Eine Welle, wie bspw. ein Rohr, an dem die Halteelemente zumindest bereichsweise aufzurollen oder abzurollen sind, beeinflusst mit einem Durchmesser erheblich eine Geschwindigkeit mit der die Halteelemente sich bewegen. Entsprechend bedingt eine große Welle mit einem Durchmesser zwischen 70 und 140 Millimeter, insbesondere von 120 Millimeter eines besonders schnelle und damit optimale Bewegung der Halteelemente.

Die Halteelemente im Bereich des Tieres sind bevorzugt als Gurte, Bänder, o.dgl. ausgebildet. Diese Gurte oder Bänder sind über Ketten, Seile, Bänder o.dgl. mit der Welle verbunden..

Insbesondere ein Gurt hat sich als geeignetes Mittel zum Halten eines Tieres, insbesondere eines Rindes herausgestellt. Selbstverständlich kann das erfindungsgemäß vorgesehene Halteelement auch aus einer Kombination von Gurt und Kette bzw. Gurt und Seil bzw. Gurt und Kette und Seil bestehen, so dass bspw. ein Gurt einen Kontaktbereich zu dem Tier und eine Kette einen Kontaktbereich zu dem Antrieb bzw. der Welle ausbildet.

Der Rahmen des vorgestellten Behandlungsstands kann bspw. ein Rohrrahmen aus Stahlrohren sein, der den Behandlungsbereich, in dem das Tier steht, von mehreren, insbesondere von vier Seiten umgibt.

Eine Anordnung des Antriebs und/oder der ersten Aktuatoren an einem oberen Ende des Rahmens, das in der Regel oberhalb einer Endposition der Haltemittel liegt, können die Aktuatoren die Haltemittel einfach und schnell anheben und in ihre Behandlungsposition bringen. Ferner wird durch eine Anordnung der Aktuatoren an einem oberen Ende des Rahmens ein Kontakt zwischen Tier und Antrieb sowie entsprechende Beschädigungen von Tier und Antrieb vermieden. Zur Verbindung von Haltemittel und Antrieb bzw. Aktuatoren kann das Haltemittel zumindest abschnittsweise über Umlenkrollen geführt sein.

Eine weitere wichtige Ausführungsform der Erfindung, die in Kombination mit dem oben eingangs genannten Behandlungsstand unabhängigen Schutz beanspruchen kann, sieht vor, dass in einem Einlassbereich für das Tier an dem Rahmen eine Tür angeordnet ist und dass der Antrieb wenigstens einen weiteren Aktuator aufweist, der die Tür zwischen einer geöffneten Stellung und einer geschlossenen Stellung bewegt.

Auf diese Weise kann das Tier, sobald es den Behandlungsstand betreten hat, rasch und zuverlässig gesichert werden. Sobald die Tür geschlossen ist, kann das Tier mittels der Halteelemente und der damit verbundenen ersten Aktuatoren des Antriebs in die Behandlungsstellung angehoben werden.

Die Erfindung sieht entsprechend vor, dass ein weiteres Steuergerät vorgesehen ist, das den weiteren Aktuator regelt, wobei das weitere Steuergerät derart ausgebildet und eingerichtet ist, dass die Regelung des weiteren Aktuators gemäß einer definierten Steuerkurve erfolgt.

Dadurch ist es möglich, die Tür mittels des weiteren Aktuators möglichst definiert und sanft zu schließen, um dem Behandler Reaktionszeit zu verschaffen, falls das Tier dennoch innerhalb des Behandlungsstandes irgendeiner Gefahr ausgesetzt ist oder falsch steht oder ausrutscht, und um das Tier nicht zu verschrecken.

Eine vorteilhafte Ausführungsform der Erfindung sieht daher vor, dass die Steuerkurve für die Regelung des weiteren Aktuators in Abschnitte unterteilt ist, wobei jeder Abschnitt einer definierten Positionen und/oder einem definierten Positionsbereich der Tür zwischen der geöffneten Stellung und der geschlossenen Stellung zugeordnet ist. Dabei ist jedem Abschnitt der Steuerkurve eine unterschiedliche Öffnungs- und/oder Schließ-Geschwindigkeit der Tür zugeordnet ist, wobei die Öffnungs- und/oder Schließ-Geschwindigkeit der Tür in wenigstens einem Abschnitt der Steuerkurve ansteigt oder absinkt.

Damit besteht die Möglichkeit, die Tür -je nach Position oder Bewegungsabschnitt - mit unterschiedlichen und an die jeweilige Situation angepassten Geschwindigkeiten zu bewegen.

Eine weitere Ausgestaltung der Erfindung verwendet einen Sensor, der die Position der Tür zwischen der geöffneten Stellung und der geschlossenen Stellung erfasst, wobei der Sensor die ermittelten Positionsdaten an das weitere Steuergerät übermittelt. Das Steuergerät ist hierbei bevorzugt weiter derart ausgebildet und eingerichtet, dass die von dem Sensor erfassten Positionsdaten mit den Werten der Steuerkurve verglichen werden und dass ermittelt wird, in welchem Abschnitt der Steuerkurve sich die Tür während der Öffnungs- oder Schließbewegung befindet. Ferner ist vorgesehen, dass das Steuergerät den weiteren Aktuator entsprechend der für den jeweils ermittelten Abschnitt vorgesehenen Öffnungs- oder Schließ-Geschwindigkeit der Tür regelt.

Damit kann die Tür jederzeit individuell und optimiert geöffnet und geschlossen werden.

Eine weitere vorteilhafte Ausführungsform der Erfindung sieht vor, dass in dem Steuergerät ein Schwellwert definiert ist, der eine Positionen der Tür zwischen der geöffneten Stellung und der geschlossenen Stellung markiert, wobei der Schwellwert zwischen zwei Abschnitten der Steuerkurve liegt und/oder den Übergang von einem Abschnitt zu einem weiteren Abschnitt der Steuerkurve markiert.

Auf diese Weise ist es beispielswiese möglich, die Tür, sobald das Tier den Behandlungsstand betreten hat, zunächst schnell, d.h. mit hoher Geschwindigkeit in die Schließposition zu bewegen, um das Tier zu sichern, und kurz vor Erreichen der Schließposition die Bewegung der Tür zu verlangsamen, um das Verhalten des Tieres beobachten zu können und um sich selbst als Bediener in eine sichere Position zu bringen.

Dazu ist weiter vorgesehen, dass der Schwellwert einen Abstand der Tür von der Schließstellung oder eine Winkelstellung der Tür zwischen der Öffnungsstellung und der Schließstellung markiert. Der Schwellwert bildet mithin einen Startpunkt für die Änderung der Bewegungsgeschwindigkeit der Tür.

Umgekehrt ist es möglich, die Tür zunächst mit einer geringen, im Laufe der Zeit leicht ansteigenden Geschwindigkeit zu öffnen. Sobald der definierte Schwellwert, d.h. eine definierte Position der Tür erreicht ist, wird die Geschwindigkeit bis erhöht, so dass die Tür rasch den Eingang für das nächste Tier freigibt.

Der Sensor ist ein Ultraschallsensor, ein Infrarotsensor, ein Abstandssensor, ein Inkrementgeber, ein Winkelsensor, ein Nockenschalter, ein Schaltvorhang, eine Schaltmatte, o.dgl..

Weiter ist das Steuergerät derart ausgebildet und eingerichtet, dass die von dem Sensor erfassten Positionsdaten mit dem Schwellwert verglichen werden und dass mit Erreichen des Schwellwerts, die Geschwindigkeit der Tür geändert wird.

Vorteilhaft kann daher mit Erreichen des Schwellwerts beim Schließen der Tür deren Geschwindigkeit bis zum Erreichen der Schließstellung durch Regelung des weiteren Aktuators (503) kontinuierlich verringert werden. Die Steuerkurve im Steuergerät bildet damit eine Art Rampe, namentlich eine Geschwindigkeitsrampe ab, anhand der die Tür bewegt wird.

Umgekehrt ist es möglich, mit Erreichen des Schwellwerts beim Öffnen der Tür deren Geschwindigkeit bis zum Erreichen eines anderen Abschnitts der Steuerkurve oder eines anderen Schwellwertes durch Regelung des weiteren Aktuators kontinuierlich zu erhöhen. Steuerkurve weist in dem Abschnitt eine Rampe auf
Eine weitere wichtige Ausführungsform der Erfindung sieht vor, dass an der Tür wenigstens eine Schaltleiste vorgesehen ist, die derart ausgebildet und eingerichtet ist, dass beim Betätigen und/oder Berühren der Schaltleiste ein Schaltsignal erzeugt, das an das weitere Steuergerät für den weiteren Aktuator übermittelt wird.

Das weitere Steuergerät ist mit Vorteil derart ausgebildet und eingerichtet, dass mit dem Erhalt eines Schaltsignals von einer Schaltleiste der weitere Aktuator angehalten, abgeschaltet oder gestoppt wird.

Gelangt also ein Bediener oder das Tier an eine der Schaltleisten, wird die Bewegung der Tür sofort unterbrochen.

Hierbei ist es günstig, wenn eine erste Schaltleiste an einer Innenseite der Tür angeordnet ist und wenn eine zweite Schaltleiste an einer Außenseite der Tür angeordnet ist.

die ersten und weiteren Aktuatoren sind vorzugsweise elektrisch, hydraulisch, pneumatisch oder magnetisch angetrieben. Insbesondere können die Aktuatoren Motoren oder Stellzylinder sein.

Der Antrieb kann ein elektrohydraulisches Aggregat umfassen, welches die Aktuatoren über die jeweils zugeordneten Steuergeräte mit Antriebsenergie versorgt.

Insbesondere hydraulische Aktuatoren, wie bspw. hydraulische Zylinder, haben sich als robuste Lösung zum Bereitstellen einer Kraft zum Bewegen der Halteelemente und/oder der Tür des vorgestellten Behandlungsstands herausgestellt.

Zum seriellen Koppeln der ersten Aktuatoren können diese über ein erstes Leitungsschema verbunden bzw. mit hydraulischer Flüssigkeit versorgt werden. Zum parallelen Koppeln der Aktuatoren können diese über ein zweites Leitungsschema verbunden bzw. mit hydraulischer Flüssigkeit versorgt werden. Dabei kann sich das erste Leitungsschema von dem zweiten Leitungsschema bspw. durch eine Stellung eines Wegeventils unterscheiden. Konstruktiv und anwendungstechnisch ist es weiter von Vorteil, wenn der Antrieb elektrische Proportionalventile umfasst, die den Aktuatoren zugeordnet sind und die von dem jeweils zugeordneten Steuergerät gesteuert werden. Mit Proportionalventilen lassen sich insbesondere die von den Steuergeräten vorgegebenen Steuerkurven optimal abbilden.

Für die Bedienung des Behandlungsstandes kann eine Schalttafel vorgesehen sein, über welche die Aktuatoren und damit die Halteelemente und/oder die Tür betätigbar ist. Eine solche Schalttafel ist mit geeigneten Bedienelementen versehen.

Dem weiteren Aktuator für die Betätigung der Tür kann zusätzlich noch ein Dämpfer zugeordnet sein, der in Schließstellung der Tür aktiv wird. Hierbei kann es sich beispielsweise um einen mechanischen Dämpfer oder Dämpfungselement handeln, dass beim Schließen der Tür aktiv wird, in dem der Anschlag gedämpft wird.

Jedem Steuergerät ist eine Recheneinheit zugeordnet. Eine solche Rechnereinheit ist im Kontext der vorgestellten Erfindung ein Computer, ein Prozessor, oder jeder weitere programmierbare und geeignete Schaltkreis.

Durch die elektrische Ansteuerung der Proportionalventile wird der Aufbau oder Abbau der zum Bewegen der Tür notwendigen Kraft erst dann eingeleitet, wenn die Recheneinheit dies entweder errechnet hat oder dies anhand der Sensordaten ermittelt worden ist.

Es kann weiterhin vorgesehen sein, dass der Behandlungsstand ein Klauenpflegestand, insbesondere für Rinder ist.

Gemäß einem zweiten Aspekt betrifft die vorgestellte Erfindung ein Behandlungsverfahren zur Behandlung eines Tieres.

Das vorgestellte Behandlungsverfahren umfasst das Eintreiben des Tieres in eine mögliche Ausgestaltung des vorgestellten Behandlungsstands, wenn dessen Halteelemente sich in der Einlassstellung befinden, das Betätigen des Antriebs zum Bewegen der Halteelemente von der Einlassstellung in die Haltestellung, wobei der Antrieb zuerst in der ersten Konfiguration und anschließend in der zweiten Konfiguration betätigt wird, das Behandeln des Tieres, das Bewegen der Halteelemente von der Haltestellung in die Einlassstellung und das Austreiben des Tieres aus dem Behandlungsstand.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Seitenansicht einer möglichen Ausgestaltung des vorgestellten Behandlungsstands dessen Halteelemente in einer Haltestellung sind,
- Fig. 2: eine Frontalansicht des Behandlungsstands gemäß Fig. 1,
- Fig. 3: eine Seitenansicht des Behandlungsstands gemäß Fig. 1, dessen Halteelemente in einer Einlassstellung sind,
- Fig. 4: eine Frontalansicht des Behandlungsstands gemäß Fig. 3,
- Fig. 5: eine Seitenansicht des Behandlungsstands gemäß Fig. 1 mit geöffneter Tür,
- Fig. 6: eine Draufsicht des Behandlungsstands gemäß Fig. 5,
- Fig. 7: eine Seitenansicht einer möglichen Ausgestaltung des vorgestellten Behandlungsstands mit geschlossener Tür,
- Fig. 8: eine Draufsicht des Behandlungsstands gemäß Fig. 7,
- Fig. 9: eine mögliche Ausgestaltung einer Tür für den Behandlungsstand gemäß der Fig. 1 bis 8,
- Fig. 10: eine mögliche Ausgestaltung des vorgestellten Behandlungsverfahrens.

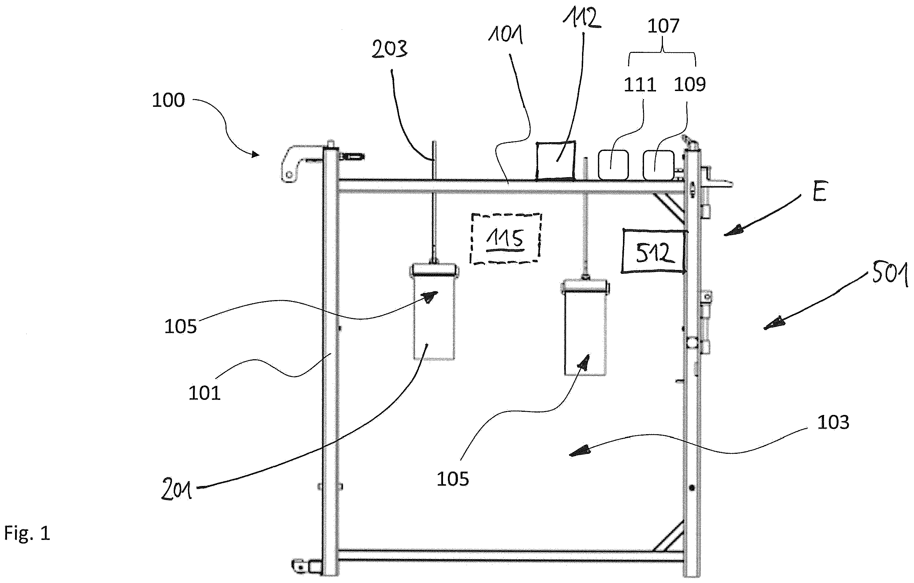

In Fig. 1 ist ein erfindungsgemäßer Behandlungsstand 100 dargestellt, der bevorzugt als Durchtreibestand ausgebildet ist.

Der Behandlungsstand 100 umfasst einen Rahmen 101, der einen Behandlungsbereich 103 zum Aufnehmen des Tieres von mehreren Seiten begrenzt, eine Anzahl Halteelemente 105 zum Halten des Tieres und einen Antrieb 107 zum Bewegen der Halteelemente zwischen einer Einlassstellung und einer Haltestellung.

Der Antrieb 107 umfasst Aktuatoren 109, 111, die zwischen einer ersten Konfiguration und einer zweiten Konfiguration umschaltbar sind, wobei eine Geschwindigkeit, mit der die Aktuatoren 109, 111 die Halteelemente 105 bewegen in der ersten Konfiguration größer ist als in der zweiten Konfiguration, und wobei eine Kraft, mit die Aktuatoren 109, 111 die Halteelemente 105 bewegen, in der zweiten Konfiguration größer ist als in der ersten Konfiguration.

Für die Steuerung der Aktuatoren 109, 111 ist ein erstes Steuergerät 112 vorgesehen, das die ersten Aktuatoren 109, 111 regelt und/oder zwischen der ersten Konfiguration und der zweiten Konfiguration umschaltet. Das erste Steuergerät ist insbesondere derart ausgebildet und eingerichtet, dass die Regelung und/oder Umschaltung der ersten Aktuatoren 109, 111 zwischen der ersten Konfiguration und der zweiten Konfiguration gemäß einer definierten Steuerkurve erfolgt.

Die Aktuatoren 109, 111 bewegen eine Welle 113, an der die Halteelemente 105 angeordnet bzw. aufgehängt sind.

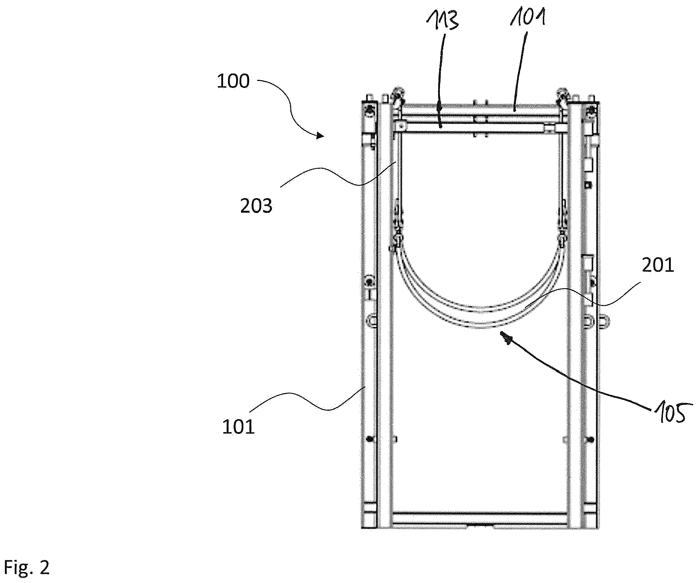

In Fig. 1 und Fig. 2 sind die Halteelemente 105 in ihrer Haltestellung dargestellt, so dass ein in dem Behandlungsbereich 103 stehendes (nicht gezeigtes) Tier durch die Halteelemente 105 gehalten, d.h. angehoben bzw. entlastet und entsprechend fixiert bzw. gesichert wird. Die Halteelemente 105 umgreifen und unterstützen das Tier gewöhnlich im Bauchbereich.

Fig. 2 zeigt den Behandlungsstand 100 in einer Frontalansicht. Hier ist gut zu erkennen, dass die Halteelemente 105 Gurte 201 und Seile 203 umfassen.

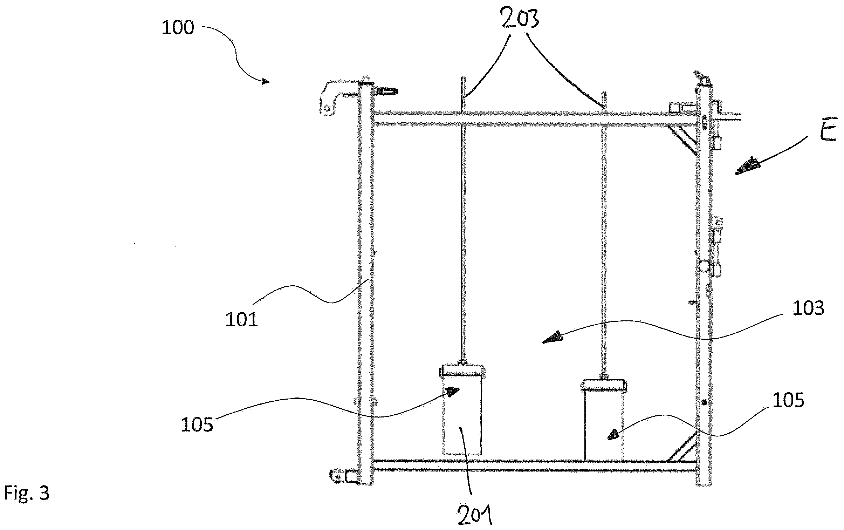

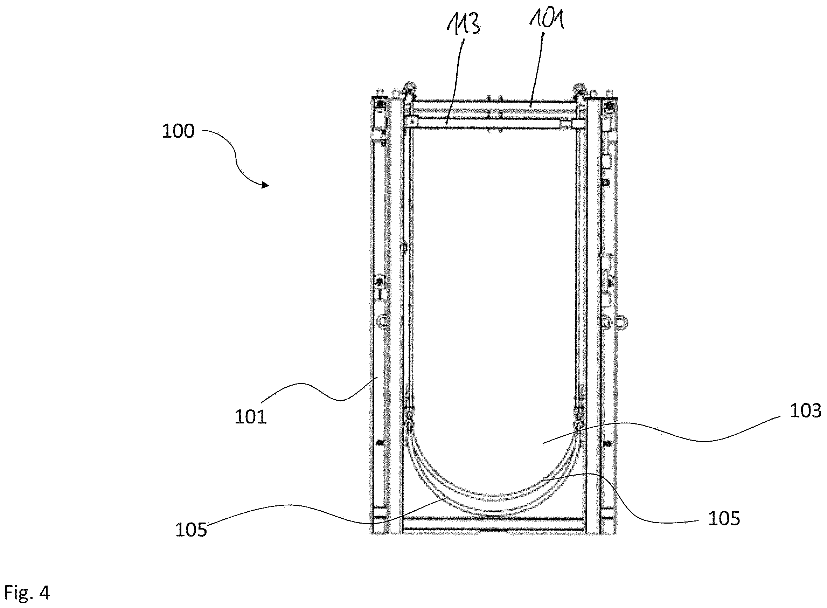

In Fig. 3 und Fig. 4 sind die Halteelemente 105 in ihrer Einlassstellung dargestellt, so dass ein Tier durch einen Einlassbereich E hindurch in den Behandlungsbereich 103 eintreten kann. Hierbei läuft das Tier über die Halteelemente 105 hinweg.

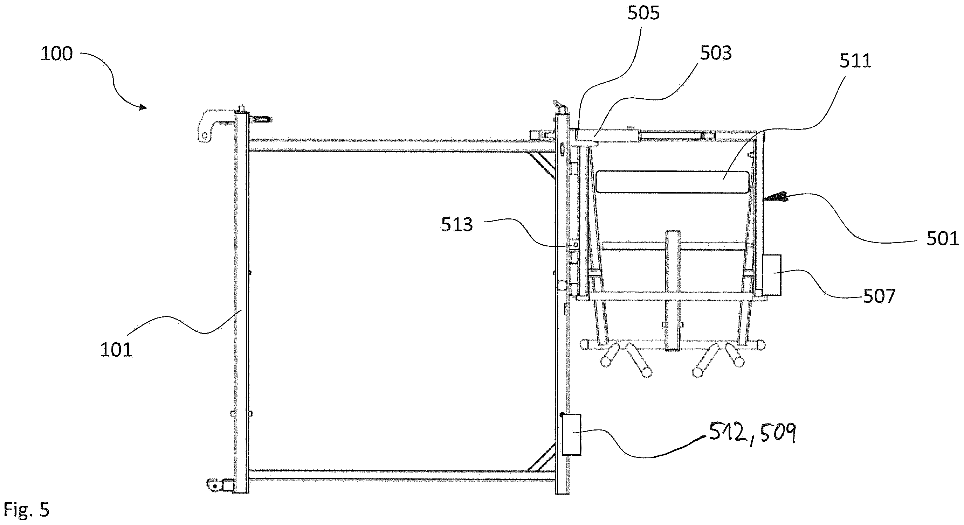

In Fig. 5 ist der Behandlungsstand 100 mit einer Tür 501 dargestellt, wobei die Tür 501 im Einlassbereich E ausgebildet ist und sich in ihrer geöffneten Stellung befindet.

Die Tür 501 ist über einen Türaktuator 503 in Form eines Hydraulikzylinders zwischen ihrer geöffneten Stellung und ihrer geschlossenen Stellung bewegbar.

Zum Öffnen der Tür 501 wird über ein elektrohydraulisches Proportionalventil 505 Öl in eine erste Kammer des Türaktuators 503 gespeist und die Tür 501 öffnet sich.

Mit einem Ultraschallsensor 507 wird über einen Messkegel eine Position der Tür 501 zu dem Rahmen 101 gemessen. Wenn der gemessene Abstand über einem vorgegebenen Schwellenwert liegt, sendet der Ultraschallsensor 507 ein Signal an die erste Steuereinheit 112. Diese ist mit einer Recheneinheit 509 ausgestattet, das die Signale verarbeiten kann.

Die Recheneinheit 509 steuert das Elektrohydraulische Proportionalventil 505 derart an, dass die Tür 501 sich gemäß einer vorgegebenen Rampenfunktion (Steuerkurve) mit abnehmender Geschwindigkeit bis zum Anschlag öffnet.

Das Abstandssignal des Sensors 507 wird mithin von der Rechnereinheit 509 des ersten Steuergeräts 112 umgewandelt in ein Steuersignal, das die Bewegungsgeschwindigkeit der Tür 501 derart regelt, dass diese beim Schließen und kurz vor Erreichen der Schließstellung langsamer wird.

Sollte sich eine Person oder ein auftretendes Objekt im Öffnungsbereich bzw. Bewegungsbereich der Tür 501 befinden, kann zusätzlich eine Schaltleiste 511, 513 betätigt werden, durch die eine Bewegung der Tür 501 sofort unterbrochen wird. Dies kann bspw. sinnvoll sein, wenn der Behandlungsstand 100 versehentlich zu dicht an einer Wand steht, die Tür 501 geöffnet wird und gegen die Wand schlägt. Dann bleibt die Tür 501 stehen und bewegt sich nicht weiter, selbst wenn man dies über die Schalttafel 111 oder die Schaltleisten 511, 513 versuchen sollte.

Wurde durch die Schaltleiste 511 oder die Schaltleiste 513 ein Stoppbefehl ausgelöst, muss der Türaktuator 503 bspw. über einen Resetschalter oder Resetknopf erst wieder freigegeben werden.

Die Bedienung des Behandlungsstandes erfolgt über eine Schalttafel 115, die beispielsweise, wie in Fig. 1 gezeigt, an einer Seite des Behandlungsstandes angeordnet ist.

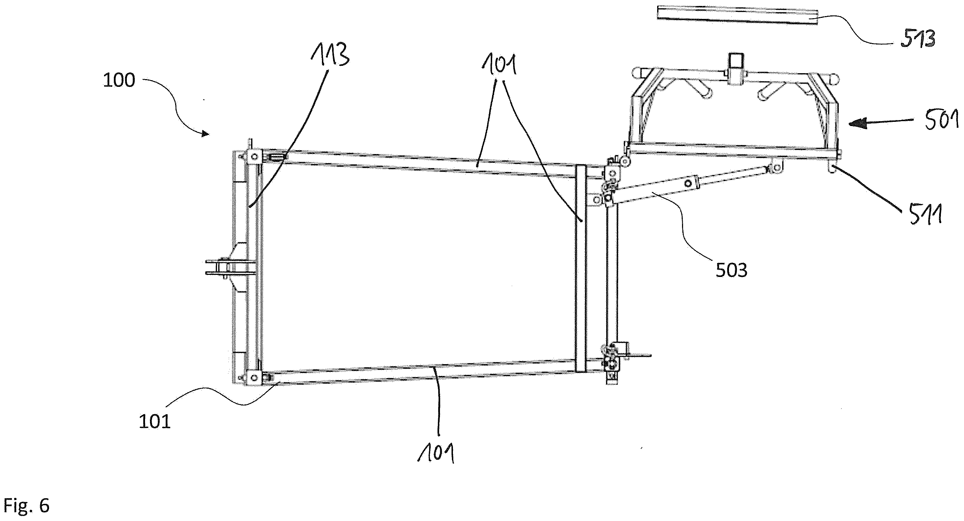

In Fig. 6 ist der Behandlungsstand 100 mit der Tür 501 in einer Draufsicht dargestellt. Hier sind der Türaktuator 503 und die Abschaltleiste 511 besonders gut erkennbar.

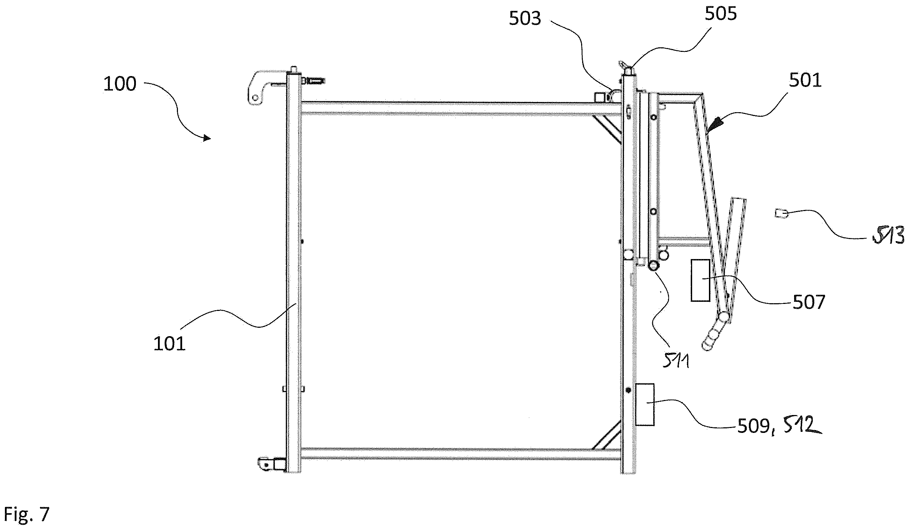

In Fig. 7 ist die Tür 501 in ihrer geschlossenen Stellung dargestellt. Beim Schließen der Tür 501 wird über das elektrohydraulisches Proportionalventil 505 Öl in eine weitere Kammer des Türaktuators 503 gespeist und die Tür 501 schließt sich

Mit dem Ultraschallsensor 507 wird über einen Messkegel der Öffnungsabstand der Tür 501 zu dem Rahmen 101 gemessen. Wenn der gemessene Abstand unter einem vorgegebenen Schwellenwert liegt, sendet der Ultraschallsensor 507 ein Signal an die Recheneinheit 509.

Die Recheneinheit 509 steuert das elektrohydraulische Proportionalventil 505 derart an, dass die Tür 501 sich gemäß einer vorgegebenen Rampenfunktion mit abnehmender Geschwindigkeit bis zum Anschlag schließt. Alternativ oder zusätzlich aktiviert die Recheneinheit die Schaltleisten 511 und 513 in Reaktion auf das durch die Recheneinheit 509 gesendete Signal.

Sollte diese elektrische Funktion einmal versagen oder ausfallen, ist im Türaktuators 503 eine mechanische Dämpfung verbaut, um auf den letzten Zentimetern eine deutliche Geschwindigkeitsabnahme zu erzielen.

Sollte sich eine Person oder ein auftretendes Objekt im Schließbereich bzw. Bewegungsbereich der Tür 501 befinden, wird die Schaltleiste 513 betätigt, durch die eine Bewegung der Tür 501 sofort unterbrochen wird.

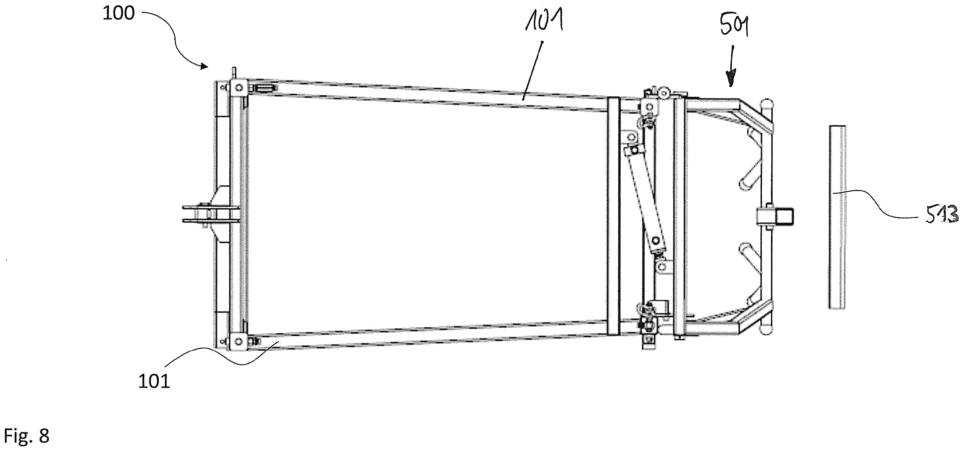

In Fig. 8 ist der Behandlungsstand 100 mit geschlossener Tür 501 in einer Draufsicht dargestellt. Hier ist die Abschaltleiste 511 besonders gut erkennbar.

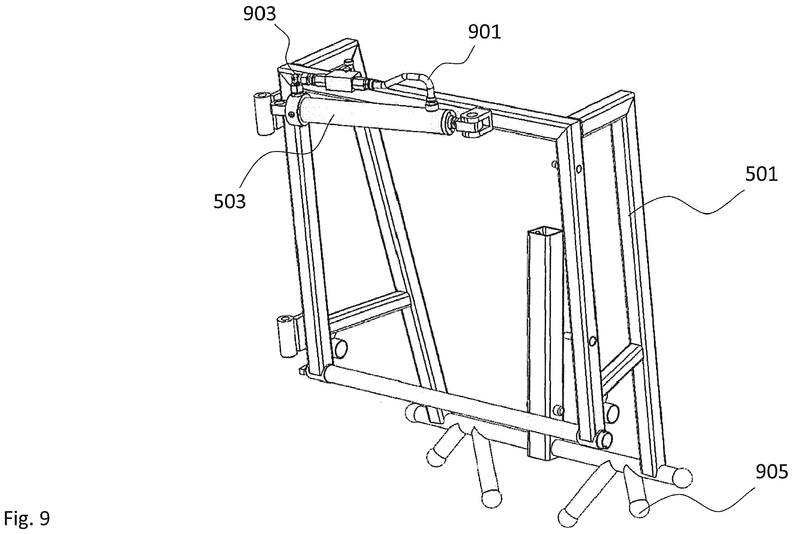

In Fig. 9 ist die Tür 501 im Detail dargestellt.

Hier ist gut zu erkennen, dass der Türaktuator 503 zwei Leitungen 901 und 903 umfasst, durch die verschiedene Kammern des Türaktuators 503 mit Öl zu befüllen bzw. zu entleeren sind.

Über abgerundete Fixierungselemente 905 wird ein Tier in dem Behandlungsstand 100 fixiert.

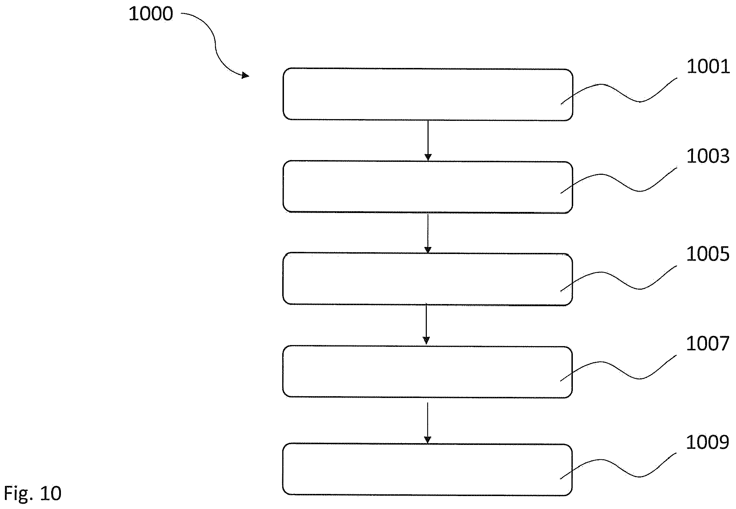

In Fig. 10 ist ein Behandlungsverfahren 1000 zum Behandeln eines Tieres dargestellt. Das Behandlungsverfahren 1000 umfasst einen Eintreibeschritt 1001, bei dem das Tier in einen Behandlungsstand bspw. gemäß Fig. 1 getrieben wird, wenn dessen Halteelemente sich in der Einlassstellung befinden.

Ferner umfasst das Behandlungsverfahren 1000 einen Betätigungsschritt 1003, bei dem ein Antrieb zum Bewegen der Halteelemente von der Einlassstellung in die Haltestellung betätigt wird, wobei der Antrieb zuerst in der ersten Konfiguration und anschließend in der zweiten Konfiguration betätigt wird, einen Behandlungsschritt 1005, bei dem das Tier behandelt wird, einen Bewegungsschritt 1007, bei dem die Halteelemente von der Haltestellung in die Einlassstellung bewegt werden, und einen Austreibungsschritt 1009, bei dem das Tier aus dem Behandlungsstand ausgetrieben wird.

Die Erfindung ist nicht auf eine der vorbeschriebenen Ausführungsformen beschränkt, sondern in vielfältiger Weise abwandelbar. So können beispielsweise die Steuergeräte 112, 512 zu einem gemeinsamen Steuergerät zusammengefasst sein. Sie Schalttafel 115 kann neben den Bedienelementen für die Halteelemente 105 und die Tür 501 weitere Bedienelemente umfassen, insbesondere auch Anzeigeelemente, wie z.B. einen Bildschirm, der Informationen über den Behandlungsstand oder dessen Betriebsparameter oder -zustand wiedergeben.

Man aber, dass in einem ersten Aspekt der Erfindung ein Behandlungsstand (100) zur Behandlung eines Tieres, einen Rahmen (101) aufweist, der einen Behandlungsbereich (103) zum Aufnehmen des Tieres von mehreren Seiten begrenzt, eine Anzahl Halteelemente (105) zum Halten des Tieres im Behandlungsbereich (103) aufweist, und einen Antrieb (107) zum Bewegen der Halteelemente (105) zwischen einer Einlassstellung und einer Haltestellung aufweist, wobei der Antrieb (107) erste Aktuatoren (109, 111) umfasst, wobei die ersten Aktuatoren (109, 111) zwischen einer ersten Konfiguration und einer zweiten Konfiguration umschaltbar sind, wobei eine Geschwindigkeit, mit der die ersten Aktuatoren (109, 111) die Anzahl Halteelemente (105) bewegen in der ersten Konfiguration größer ist als in der zweiten Konfiguration, und wobei eine Kraft, mit der die ersten Aktuatoren (109, 111) die Anzahl Halteelemente (105) bewegen, in der zweiten Konfiguration größer ist als in der ersten Konfiguration. Ferner ist ein erstes Steuergerät (112) vorgesehen, das die ersten Aktuatoren (109, 111) regelt und/oder zwischen der ersten Konfiguration und der zweiten Konfiguration umschaltet

Ein zweiter Aspekt der Erfindung sieht vor, dass ein Behandlungsstand (100) zur Behandlung eines Tieres, einen Rahmen (101) aufweist, der einen Behandlungsbereich (103) zum Aufnehmen des Tieres von mehreren Seiten begrenzt, eine Anzahl Halteelemente (105) zum Halten des Tieres im Behandlungsbereich (103) aufweist, und einen Antrieb (107) zum Bewegen der Halteelemente (105) zwischen einer Einlassstellung und einer Haltestellung aufweist, wobei der Antrieb (107) erste Aktuatoren (109, 111) umfasst, und wobei in einem Einlassbereich (E) für das Tier an dem Rahmen (101) eine Tür (501) angeordnet ist, wobei der Antrieb (107) wenigstens einen weiteren Aktuator (503) aufweist, der die Tür (501) zwischen einer geöffneten Stellung und einer geschlossenen Stellung bewegt. Ein weiteres Steuergerät (512) regelt den weiteren Aktuator (503) für die Tür 501, wobei das weitere Steuergerät (512) derart ausgebildet und eingerichtet ist, dass die Regelung des weiteren Aktuators (503) gemäß einer definierten Steuerkurve erfolgt.

Die Steuerkurve für die Regelung des weiteren Aktuators (503) ist in Abschnitte unterteilt, wobei jeder Abschnitt einer definierten Positionen und/oder einem definierten Positionsbereich der Tür (501) zwischen der geöffneten Stellung und der geschlossenen Stellung zugeordnet ist. Jedem Abschnitt der Steuerkurve ist eine unterschiedliche Öffnungs- und/oder Schließ-Geschwindigkeit der Tür (501) zugeordnet, so dass diese entlang der Öffnungs- oder Schließbewegung mit unterschiedlichen und angepassten Geschwindigkeiten bewegt werden kann.

Weiter ist ein Sensor (507) vorgesehen, der die Position der Tür (501) zwischen der geöffneten Stellung und der geschlossenen Stellung erfasst, wobei der Sensor (507) die ermittelten Positionsdaten an das weitere Steuergerät (512) übermittelt.

Das Steuergerät (512) ist mittels einer Rechnereinheit 509 derart ausgebildet und eingerichtet, dass die von dem Sensor (507) erfassten Positionsdaten mit den Werten der Steuerkurve verglichen werden und dass ermittelt wird, in welchem Abschnitt der Steuerkurve sich die Tür (501) während der Öffnungs- oder Schließbewegung befindet. Das Steuergerät kann nun den weiteren Aktuator (503) entsprechend der für den jeweils ermittelten Abschnitt vorgesehenen Öffnungs- oder Schließ-Geschwindigkeit der Tür (501) regeln.

Man erkennt weiter, dass der erfindungsgemäße Behandlungsstand mit mehreren Sicherheitseinrichtungen ausgestattet ist.

Zum einen wird das zu behandelnde Tier besonders effizient und am Ende sanft von den Halteelementen und den ersten Aktuatoren angehoben, wobei die Steuerung und der Bewegungsablauf von einem ersten Steuergerät 112 geregelt wird.

Zum anderen wird die Tür 501 im Eingangsbereich E des Rahmens 101 ebenfalls von einem Steuergerät 512 gesteuert, wobei der angeschlossene Aktuator 503 die Tür 501 mit unterschiedlichen Geschwindigkeiten bewegt. Insbesondere wird die Tür 501 zunächst von der Öffnungsstellung aus mit einer ersten, relativ hohen Geschwindigkeit bewegt. Ab dem Erreichen einer bestimmten Position, namentlich einem definierten Abstand zur Schließstellung, wird die Geschwindigkeit der Tür 501 mittels einer rampenförmigen Steuerkurve, die in dem weiteren Steuergerät 512 hinterlegt ist, verringert, so dass die Tür immer langsamer wird und damit sanft schließen kann. Dies schafft für den Bediener, der das Tier behandeln wird, Zeit, auf Gefahrensituationen zu achten und zu reagieren. Zudem wird das Tier in dem Behandlungsstand nicht verschreckt.

Weiter sorgen die an der Tür (501) angebrachten Schaltleisten (511, 513) dafür, dass im Falle einer unbeabsichtigten oder unvorhergesehenen Berührung der Tür 501 mit einem Hindernis, die Tür 501 sofort stehen bleibt.

Schließlich ist dem weiteren Aktuator (503) für die Betätigung der Tür (501) noch ein Dämpfer zugeordnet, der in Schließstellung der Tür (501) aktiv wird, so dass die Tür in der Schließstellung den Behandlungsstand vollends sanft verriegelt

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- E: Einlassbereich

- 100: Behandlungsstand
- 101: Rahmen
- 103: Behandlungsbereich
- 105: Halteelement
- 107: Antrieb
- 109: erster Aktuator
- 111: erster Aktuator
- 112: erstes Steuergerät
- 113: Welle
- 115: Schalttafel
- 201: Gurt

- 203: Seil
- 501: Tür
- 503: weiterer Aktuator
- 505: Proportionalventil
- 507: Sensor
- 509: Recheneinheit
- 511: Schaltleiste
- 512: weiteres Steuergerät
- 513: Schaltleiste
- 901: Leitung
- 903: Leitung

## Patentansprüche

1. Behandlungsstand (100) zur Behandlung eines Tieres,
a) mit einem Rahmen (101), der einen Behandlungsbereich (103) zum Aufnehmen des Tieres von mehreren Seiten begrenzt,
b) mit einer Anzahl Halteelemente (105) zum Halten des Tieres im Behandlungsbereich (103), und
c) mit einem Antrieb (107) zum Bewegen der Halteelemente (105) zwischen einer Einlassstellung und einer Haltestellung,
d) wobei der Antrieb (107) erste Aktuatoren (109, 111) umfasst,
e) wobei die ersten Aktuatoren (109, 111) zwischen einer ersten Konfiguration und einer zweiten Konfiguration umschaltbar sind,
f) wobei eine Geschwindigkeit, mit der die ersten Aktuatoren (109, 111) die Anzahl Halteelemente (105) bewegen in der ersten Konfiguration größer ist als in der zweiten Konfiguration, und
g) wobei eine Kraft, mit der die ersten Aktuatoren (109, 111) die Anzahl Halteelemente (105) bewegen, in der zweiten Konfiguration größer ist als in der ersten Konfiguration.

2. Behandlungsstand (100) nach Anspruch 1, **dadurch gekennzeichnet, dass** ein erstes Steuergerät (112) vorgesehen ist, das die ersten Aktuatoren (109, 111) regelt und/oder zwischen der ersten Konfiguration und der zweiten Konfiguration umschaltet, wobei das erste Steuergerät (112) derart ausgebildet und eingerichtet ist, dass die Regelung und/oder Umschaltung der ersten Aktuatoren (109, 111) zwischen der ersten Konfiguration und der zweiten Konfiguration gemäß einer definierten Steuerkurve erfolgt.

3. Behandlungsstand (100) nach Anspruch 2, **dadurch gekennzeichnet, dass** die Steuerkurve zumindest abschnittsweise und/oder zeitweise die erste Konfiguration und die zweite Konfiguration der ersten Aktuatoren (109, 111) abbildet.

4. Behandlungsstand (100) nach einem der voranstehenden Ansprüche, **dadurch gekennzeichnet, dass** in einem Einlassbereich (E) für das Tier an dem Rahmen (101) eine Tür (501) angeordnet ist und dass der Antrieb (107) wenigstens einen weiteren Aktuator (503) aufweist, der die Tür (501) zwischen einer geöffneten Stellung und einer geschlossenen Stellung bewegt.

5. Behandlungsstand (100) nach Anspruch 4, **dadurch gekennzeichnet, dass** ein weiteres Steuergerät (512) vorgesehen ist, das den weiteren Aktuator (503) regelt, wobei das weitere Steuergerät (512) derart ausgebildet und eingerichtet ist, dass die Regelung des weiteren Aktuators (503) gemäß einer definierten Steuerkurve erfolgt.

6. Behandlungsstand (100) nach Anspruch 5, **dadurch gekennzeichnet, dass** die Steuerkurve für die Regelung des weiteren Aktuators (503) in Abschnitte unterteilt ist, wobei jeder Abschnitt einer definierten Positionen und/oder einem definierten Positionsbereich der Tür (501) zwischen der geöffneten Stellung und der geschlossenen Stellung zugeordnet ist.

7. Behandlungsstand nach Anspruch 6, **dadurch gekennzeichnet, dass** jedem Abschnitt der Steuerkurve eine unterschiedliche Öffnungs- und/oder Schließ-Geschwindigkeit der Tür (501) zugeordnet ist, wobei die Öffnungs- und/oder Schließ-Geschwindigkeit der Tür (501) in wenigstens einem Abschnitt der Steuerkurve ansteigt oder absinkt.

8. Behandlungsstand (100) nach einem der Ansprüche 4 bis 7, **dadurch gekennzeichnet, dass** ein Sensor (507) vorgesehen ist, der die Position der Tür (501) zwischen der geöffneten Stellung und der geschlossenen Stellung erfasst, wobei der Sensor (507) die ermittelten Positionsdaten an das weitere Steuergerät (512) übermittelt.

9. Behandlungsstand (100) nach Anspruch 8, **dadurch gekennzeichnet, dass** das Steuergerät (512) weiter derart ausgebildet und eingerichtet ist, dass die von dem Sensor (507) erfassten Positionsdaten mit den Werten der Steuerkurve verglichen werden und dass ermittelt wird, in welchem Abschnitt der Steuerkurve sich die Tür (501) während der Öffnungs- oder Schließbewegung befindet, und dass das Steuergerät den weiteren Aktuator (503) entsprechend der für den jeweils ermittelten Abschnitt vorgesehenen Öffnungs- oder Schließ-Geschwindigkeit der Tür (501) regelt.

10. Behandlungsstand (100) nach einem der Ansprüche 5 bis 9, **dadurch gekennzeichnet, dass** in dem Steuergerät (512) ein Schwellwert definiert ist, der eine Positionen der Tür (501) zwischen der geöffneten Stellung und der geschlossenen Stellung markiert, wobei der Schwellwert einen Abstand der Tür (501) von der Schließstellung oder eine Winkelstellung der Tür (501) zwischen der Öffnungsstellung und der Schließstellung markiert.

11. Behandlungsstand (100) nach Anspruch 10, **dadurch gekennzeichnet, dass** das Steuergerät (512) weiter derart ausgebildet und eingerichtet ist, dass die von dem Sensor (507) erfassten Positionsdaten mit dem Schwellwert verglichen werden und dass mit Erreichen des Schwellwerts, die Geschwindigkeit der Tür (510) geändert wird.

12. Behandlungsstand (100) nach Anspruch 10 oder 11, **dadurch gekennzeichnet, dass** mit Erreichen des Schwellwerts beim Schließen der Tür (501) deren Geschwindigkeit bis zum Erreichen der Schließstellung durch Regelung des weiteren Aktuators (503) kontinuierlich verringert wird und/oder dass mit Erreichen des Schwellwerts beim Öffnen der Tür (501) deren Geschwindigkeit bis zum Erreichen eines anderen Abschnitts der Steuerkurve durch Regelung des weiteren Aktuators (503) kontinuierlich erhöht wird.

13. Behandlungsstand (100) nach einem der Ansprüche 4 bis 12, **dadurch gekennzeichnet, dass** an der Tür (501) wenigstens eine Schaltleiste (511, 513) vorgesehen ist, die derart ausgebildet und eingerichtet ist, dass beim Betätigen und/oder Berühren der Schaltleiste (511, 513) ein Schaltsignal erzeugt, das an das weitere Steuergerät (512) für den weiteren Aktuator (503) übermittelt wird, wobei das weitere Steuergerät (512) derart ausgebildet und eingerichtet ist, dass mit dem Erhalt eines Schaltsignals von einer Schaltleiste (511, 513) der weitere Aktuator (503) angehalten, abgeschaltet oder gestoppt wird.

14. Behandlungsstand (100) nach einem der Ansprüche 4 bis 13, **dadurch gekennzeichnet, dass** dem weiteren Aktuator (503) für die Betätigung der Tür (501) ein Dämpfer zugeordnet ist, der in Schließstellung der Tür (501) aktiv wird. mechanisch

15. Behandlungsverfahren (1000) zur Behandlung eines Tieres,
wobei das Behandlungsverfahren (1000) umfasst:
a) Eintreiben (1001) des Tieres in einen Behandlungsstand (100) nach einem der Ansprüche 1 bis 14, wenn dessen Halteelemente (105) sich in der Einlassstellung befinden,
b) Betätigen (1003) des Antriebs (107) zum Bewegen der Halteelemente (105) von der Einlassstellung in die Haltestellung,
wobei der Antrieb (107) zuerst in der ersten Konfiguration und anschließend in der zweiten Konfiguration betätigt wird,
c) Behandeln (1005) des Tieres,
d) Bewegen (1007) der Halteelemente (105) von der Haltestellung in die Einlassstellung,
e) Austreiben (1009) des Tieres aus dem Behandlungsstand (100).

16. Behandlungsverfahren (1000) nach Anspruch 15, **dadurch gekennzeichnet, dass** die Tür (501) im Einlassbereich des Rahmens (101) anhand einer Steuerkurve mit unterschiedlichen, insbesondere in Schließrichtung abnehmenden und/oder in Öffnungsrichtung zunehmenden Geschwindigkeiten bewegt wird.
